(19) **Europäisches Patentamt European Patent Office Office européen des brevets**

(11) **EP 4 290 322 B1**

(12) **EUROPEAN PATENT SPECIFICATION**

(45) Date of publication and mention of the grant of the patent:
**01.04.2026 Bulletin 2026/14**

(21) Application number: **22305827.2**

(22) Date of filing: **07.06.2022**

(51) International Patent Classification (IPC):
**G05B 19/418** (2006.01)　　**G05B 23/02** (2006.01)

(52) Cooperative Patent Classification (CPC):
**G05B 19/41875;** G05B 23/0235; G05B 2219/32194; G05B 2219/34477; G05B 2219/37542

(54) **INFERENCE OF EMERGING PROBLEMS IN PRODUCT MANUFACTURING**

ABLEITUNG NEUER PROBLEME BEI DER PRODUKTHERSTELLUNG

INFÉRENCE DE PROBLÈMES ÉMERGENTS DANS LA FABRICATION DE PRODUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2023 Bulletin 2023/50**

(73) Proprietor: **Dassault Systèmes**
**78140 Vélizy-Villacoublay (FR)**

(72) Inventors:
• **GREHANT, Xavier**
**Paris (FR)**
• **DALIE, Arnaud**
**Paris (FR)**

(74) Representative: **Bandpay & Greuter**
**11 rue Christophe Colomb**
**75008 Paris (FR)**

(56) References cited:
**US-A1- 2015 248 755　US-A1- 2020 081 422**
**US-A1- 2020 341 459　US-A1- 2021 247 754**

## Description

## TECHNICAL FIELD

The disclosure relates to the field of computer programs and systems, and more specifically to a method, system and program for inferring an emerging problem in product manufacturing.

## BACKGROUND

A number of systems and programs are offered on the market for performing assessment of quality in product manufacturing. Within this context, the detection of emerging problems in product manufacturing is gaining more and more importance.

Existing methods for the detection of emerging problems involve, for example, trend detection methods, weak signal detection based on explicit semantic analysis, sentiment analysis, weak signal detection based on anomaly detection, and methods for problem prevention via cause-effect graphs, such as failure modes and effect analysis (FMEA).

Trend detection methods involve detecting global changes in a number of events. Some examples of existing trend detection methods are discussed in the URL: https://www.ibm.com/docs/en/siffs/2.0.3?topic=learning-trend-detection.

However, trend detection methods present some drawbacks. For example, due to the global nature of these methods, events representative of an emerging problem may correspond to a too small portion of the global volume and are thus difficult to distinguish from the global volume. Moreover, the semantics of the incidents may shift in time, with old problems replaced with new ones, and without changes in the volume of events. In addition, these methods are not accurate enough when the volume of events changes, yet in the absence of emerging problems, e.g., due to changes in how data is produced or captured. As another drawback, if a user provides a focus on a subset of events to detect specific problems or to attempt to reduce the overall volume in which to detect a trend, then there is a lack of serendipity.

Weak signal detection based on explicit semantic analysis methods are approaches that explore categories of events. Weak signal detection involves extracting, from event data, event categories, which are the semantics relevant to the problem prior to its emergence. When the problem starts emerging, the method requires manual filtering of the data on the different incident categories, until the combined filters define a cluster of data on which a problem is visibly occurring.

Some examples of existing weak signal detection based on explicit semantic analysis methods are discussed in the URLs: https://www.proxem.com/en/customer-interview-pierre-jallais-search-and-nlp-project-manager-total/?utm_source= twitter &utm_medium=social&utm_campaign=plezi, and https://www.3ds.com/insights/ customer-stories/ engie.

Weak signal detection based on explicit semantic analysis methods also presents some drawbacks. For example, exploring all possible combinations of filters has exponential cost. This is especially true for weak signals, that require to filter the data aggressively. This may refrain from detecting emerging problems early. In addition, emerging problems may not correspond to predefined categories, resulting in false negatives, i.e., emerging problems that are not detected. Moreover, the method is not suitable when the description of symptoms is in the form of non textual data such as images, 3D shapes, or time series. Indeed, semantic analysis requires labeled data, i.e., large numbers of correctly classified examples, which is typically costly to build and maintain. In other words, an important limitation of this approach is the requirement of building a query to construct a consistent set of cases prior to detection.

Sentiment analysis methods is a particular method of the weak signal detection approach based on explicit semantic analysis. Here, the extracted semantics refer to the sentiment of the user.

Some examples of existing sentiment analysis methods are discussed in Teng, He Xu, "Concept-level sentiment analysis in the manufacturing industry", found in the URL: https://dr.ntu.edu.sg/handle/10356/138444.

Existing sentiment analysis methods also present some drawbacks. For example, sentiment is a generic signal of poor quality. Indeed, on its own, a sentiment does not allow to discriminate inherently different non quality events. Also, a sentiment is not actionable in itself. For example a change in sentiment cannot be routed to an expert that will readily work on solving a specific problem. In addition, sentiment is a global signal and, as such, it suffers from the same drawbacks as trend detection. Moreover, in spite of the recent interest surrounding sentiment analysis, in general it is a more limited approach when used to detect and resolve non quality in manufacturing than more specific semantic analyses.

Weak signal detection based on anomaly detection methods are other approaches to try to prevent defects on manufactured products. An anomaly is when a signal (data) is different from usual. The idea of these approaches is to monitor all available data on the processes and look for outliers (e.g. isolated occurrences) in the data. This can for example be done with autoencoders, i.e., neural networks that encode the data and reproduce the data from the encoding. If the data is different from usual, autoencoders will not reproduce it correctly and trigger an alarm. Other approaches would rely on classifiers; regressors or clustering algorithms and trigger an alarm when data falls into a rare category, prediction or cluster. Using anomaly detection for quality relies on the hypothesis that processes are producing good quality most of the time. These approaches are rather adapted to raise alerts for isolated occurrences than to raise alerts for recurrent issues; for instance these approaches are less relevant for problem detection due to root causes in design or manufacturing, as errors in design or manufacturing would typically not cause isolated anomalies but recurrent issues.

Some examples of existing weak signal detection based on anomaly detection methods are discussed in Yang, Jing, et al. "Using deep learning to detect defects in manufacturing: a comprehensive survey and current challenges", Materials 13.24 (2020): 5755. Other examples are also discussed in the URLs: https://towardsdatascience.com/anomaly-detection-in-manufacturing-part-1-an-introduction-8c29f70fc68b, and https://www.mdpi.com/1996-1944/13/24/5755/ pdf.

Weak signal detection based on anomaly detection methods do have some drawbacks. For example, existing methods may be prone to present false positives: new anomalies in data are not necessarily associated with non-quality. The same goes for false negatives: parts of the design, manufacturing and maintenance processes, context of use of the product, are not always instrumented end to end, so data may not be available to trigger an alarm a priori. In addition, weak signal detection based on anomaly detection presents the problem of the curse of dimensionality: for complex products, with complex design and manufacturing processes, the dimensionality of data is typically large. This makes it difficult to achieve a representation of the data that allows for good compromises between precision and recall. In addition to dimensionality, anomaly detection is sensitive to the problems of instrumentation, because it consists in outlying isolated occurrences that differ from the rest. This implies that events must be sufficiently well characterized with data a priori in order to discriminate relevant anomalies.

Problem prevention via cause-effect graphs methods such as knowledge base methods or FMEA involve the use of observed causality relations that lead to failure modes. Failure modes and effects analysis databases are preexisting databases of cause-and-effect relations known to be related to non-quality. They typically contain knowledge gained in analyzing past problems. This knowledge can be used to more quickly analyze the possible causes of confirmed problems. It can also be used to help efficiently instrument processes and choose which probes should be placed and where, so that the most useful data is collected.

Some examples of existing problem prevention via cause-effect graphs methods are discussed in Vogel-Heuser, Birgit, et al. "Potential for combining semantics and data analysis in the context of digital twins", Philosophical Transactions of the Royal Society A 379.2207 (2021): 20200368. Other examples are also discussed in : Toolkit, QI Essentials. "Failure Modes and Effects Analysis (FMEA) Tool." Institute for Healthcare Improvement (2017).

Methods using problem prevention via cause-effect graphs also share some drawbacks. For example, the databases alone do not suffice to detect new types of problems in an environment that is evolving in each step of design, production, maintenance, and operation. Moreover, cause-effect graphs (such as knowledge bases or knowledge graphs) are typically the result of problem detection, followed by problem analysis. Hence, cause-effect graphs are used to capitalize on the analyses and not rediscover known problems. <<Insert p. 4a here>>

Also known in the art are:

- US 2021/247754 A1 which discloses a product state estimation device;
- US 2020/341459 A1 which discloses a predictive maintenance method for a component of a production tool;
- US 2020/081422 A1 which discloses methods and systems for predicting health of products in a manufacturing process; and
- US 2015/248755 A1 which discloses a method for capturing and analyzing monitoring data of a measuring system.

Within this context, there is still a need for an improved method for inferring an emerging problem in product manufacturing.

### SUMMARY

It is therefore provided a computer-implemented method for inferring an emerging problem in product manufacturing as set out in the appended claims. The method comprises obtaining a time-ordered set comprising one or more snapshots of a product and one or more similarity thresholds. The method also comprises obtaining at least one recent snapshot, the at least one recent snapshot being time-ordered after at least one snapshot of the time-ordered set. The method also comprises retrieving a subset of one or more snapshots from the time-ordered set, the one or more snapshots being time-ordered before the at least one recent snapshot and satisfying, with respect to the at least one recent snapshot, a similarity above at least one of the one or more similarity thresholds. The method also comprises determining a trend from the retrieved subset and a baseline, the trend being a time distribution of the snapshots of the retrieved subset with respect to the baseline.

The method may comprise one or more of the following:

- determining the trend further comprises computing the time distribution with respect to the baseline by determining a ratio between the one or more snapshots of the subset and a predetermined baseline time-ordered set, the predetermined baseline time-ordered set being a predetermined time-ordered set of snapshots of the product.
- determining the trend further comprises computing the time distribution by fitting the snapshots of the retrieved subset to a time-series distribution, and comparing the computed time distribution to one or more predetermined baseline values.

determining the trend further comprises computing the time distribution by defining a function that takes the one or more snapshots of the subset as input, the output of the function being compared to a probability distribution that determines a ratio between one or more values of the output of the function and one or more predetermined baseline values of the probability distribution.

- the one or more similarity thresholds are each based on one or more similarity signatures of the one or more snapshots of the time-ordered set.
- the one or more similarity thresholds are additionally based on a predetermined threshold on a number of the one or more snapshots of the product comprised in the time-ordered set.
- the one or more similarity signatures are obtained from a neural network architecture applied to a respective snapshot of the product.
- the one or more similarity signatures encode one or more of:

  ◦information on the distribution of the product;
  ◦ information of the response of the product to a physical stimulation; and/or
  ◦ a text description of the product.

- further comprising computing one or more labels for each of the one or more snapshots corresponding to the determined trend, the computing comprising:

  ◦ obtaining metadata from each of the one or more snapshots, each respective metadata comprising range(s) of physical values of the product and being representative of the emerging problem;
  ◦ associating, to each of the one or more snapshot, data pieces each corresponding to the obtained metadata.

- further comprising obtaining a first distribution of the obtained metadata over the retrieved snapshots and a second distribution of the obtained metadata over the dataset, and associating data pieces each corresponding to obtained metadata for which the obtained first and second distributions are different.
- further comprising performing a consistency check of the obtained metadata with metadata of the recent snapshot.

It is further provided a computer program comprising instructions for performing the method.
It is further provided a computer readable storage medium having recorded thereon the computer program.

It is further provided a system comprising a processor coupled to a memory and a graphical user interface, the memory having recorded thereon the computer program.

**BRIEF DESCRIPTION OF THE DRAWINGS**

Non-limiting examples will now be described in reference to the accompanying drawings, where:

- FIG. 1 shows a flowchart of an example of the method;
- FIG. 2 shows an example of an implementation of the method;
- FIG. 3 shows another example of an implementation of the method; and
- FIG. 4 shows an example of the system.

**DETAILED DESCRIPTION**

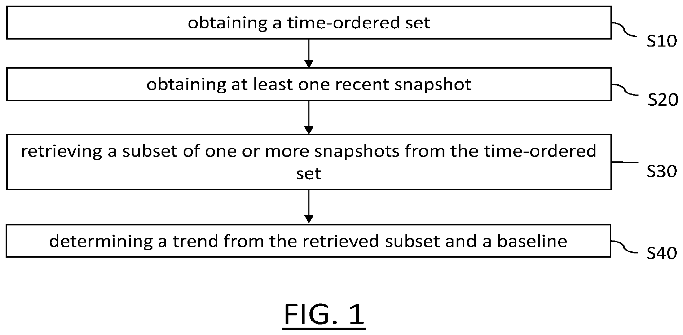

With reference to the flowchart of FIG. 1, it is proposed a computer-implemented method for inferring an emerging problem in product manufacturing. The method comprises obtaining S10 a time-ordered set. The time-ordered set comprises one or more snapshots of a product and one or more similarity thresholds. The method also comprises obtaining S20 at least one recent snapshot. The at least one recent snapshot is time-ordered after at least one snapshot of the time-ordered set. The method also comprises retrieving S30 a subset of one or more snapshots from the time-ordered set. The one or more snapshots are time-ordered before the at least one recent snapshot. Said one or more snapshot satisfy, with respect to the at least one recent snapshot, a similarity above at least one of the one or more similarity thresholds. The method also comprises determining S40 a trend from the retrieved subset and a baseline. The trend is a time distribution of the snapshots of the retrieved subset with respect to the baseline.

Such a method improves the inference of emerging problems in product manufacturing. Indeed, the method is better able to detect problems of non-quality on products without previous knowledge of a probability of occurrence of the emerging problem. The method is able to infer the emerging problem even if the problem is of a type that was not previously identified and/or anticipated. The method is also able to infer the emerging problem even if the cause-effect relations leading to the emerging problem are not known. Yet additionally, the method is agnostic on the instrumentation used for acquiring the snapshots. Indeed, the method is able to infer an emerging problem even if the instrumentation of activities leading to the problem may not have resulted in alerts, such instrumentation may not even exist.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A product contemplated by the method is to be manufactured, tested and/or operated in various and unlimited industrial fields, including: aerospace, architecture, construction, consumer goods, high-tech devices, industrial equipment, transportation, marine, and/or offshore oil/gas production or transportation. The product may be any mechanical part, such as a part of a terrestrial vehicle (including e.g. car and light truck equipment, racing cars, motorcycles, truck and motor equipment, trucks and buses, trains), a part of an aerial vehicle/aircraft (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

An emerging problem in product manufacturing is any kind of problem in any part of the manufacturing process of the product, and which results in a loss of quality or defects of the product. The emerging problem may appear, for example, in any step of a production line, during testing phases of the product after being manufactured (that is, the product being tested prior to commercialization for performing quality assurance tasks), and/or operation after the product has been commercialized. By inferring the emergent problem it is meant that the method detects the emerging problem present in the product from the time-ordered set.

The time-ordered set is formed by a chronological data structure comprising (e.g., by storing in physical memory) one or more snapshots ordered by time (i.e. chronologically) and the one or more similarity thresholds (e.g., only one similarity threshold). The chronological data structure may comprise a timestamp and/or dating information (e.g. including day and/or time) for at least part (e.g. all) of the snapshots, or alternatively no such precise information. In the latter case, the chronological data structure may be arranged so as to retrieve the chronological sequence between each of the one or more snapshots, or the chronological data structure may comprise an ordering index for each snapshot. In any case, the snapshots may be separated by a uniform amount of time between each other or, alternatively, by a non-uniform amount of time.

The time-ordered set also comprises the one or more similarity thresholds. By convention, a similarity threshold is a non-negative number which corresponds to a predetermined lower limit of a measure of similarity. For example, two (or more) snapshots of the time-ordered may be considered to be similar if the measure of similarity of each of the two (or more) snapshots is equal or greater than the predetermined lower limit, e.g., by direct comparison of a magnitude of the measure of similarity and the lower limit, or by applying a function a (e.g., a monotonically increasing function) to the measure of similarity, and comparing the output of the function to the predetermined lower limit. The one or more similarity thresholds may be provided in any manner.

A snapshot of the product represents a distribution of a physical signal of the product, for example on a production line, on a quality testbed and/or in any other type of premise/floor where the product is in operation. A snapshot of the product may be a data structure comprising, e.g., 2D, 3D information, textual information (e.g., in the form of annotated logs) or numerical information corresponding to measured physical data (representing information such as, for example, yield - the number of products processed in an amount of time, rotation speed of a machining tool). The distribution may be of any shape. For example, in the case the distribution comprises 2D information, the snapshot may be represented as a grid of pixels, the grid being possibly irregular or regular. The physical signal may comprise, for example, visible light, non-visible (e.g., infrared or X-Ray) light, vibrations, sounds, temperature. The physical signal may be any signal obtained from a sensor. The sensor may be any kind of sensor used in the industry configured to acquire the physical signal, which may be built-in on the production line, on the quality testbed and/or in any other type of premise/floor where the product is in operation. The sensor may be configured to acquire the physical signal through any means, e.g., the sensor may be an RGB sensor configured to capture visible light, a depth sensor, an IR sensor, or an edge sensor, such as an industrial computed tomography scanner. The physical signal obtained from the sensor may be represented in the snapshot through color levels, gray levels, surface, volume occupancy, depth or presence of edges of the product, such that the snapshot may comprise a 2D image or 3D RGB/grayscale/depth representation, or a 3D volume or mesh.

The time-ordered set thus stores the one or more snapshots chronologically, e.g., ordered according to the time by which the snapshot was acquired by a corresponding sensor. For example, the sensor may be incorporated into a video camera and the snapshots of the time-ordered set comprise (e.g. RGB or grayscale or CT scan) frames of a video stream acquired from the video camera. In this case, for example, the time-series set may additionally comprise (for instance, in the chronological data structured comprised in the time-ordered set) timestamps that may indicate the date and hour of acquisition of each snapshot.

Referring back to FIG. 1, the obtained time-ordered set at S10 may have been formed at different times, at different locations, with different systems or sensors and/or by different persons or entities. In other words, the snapshots comprised in the time-ordered set may have been acquired in any step of the production line, during testing phases, and/or during operation of the (same) product on any premise. As the snapshots are chronologically ordered in any of the previous stages of production, testing, or operation, the method may perform any kind of data conversion on the snapshots of the time-ordered set to perform subsequent steps S20-S40.

For example, the time-ordered set may be obtained, at S10, in a production line in the industrial domain of welding or concrete building, and the snapshots are 3D or 2D scans of (e.g., a part of, or all of) the product being manufactured. In this example, the snapshots may be chronologically acquired by one or more industrial computer tomography (CT) sensors installed as part of the production line, that is, sensors already in place to inspect for known types of problems such as void or bubbles, as typically appearing in the domain of welding or concrete building.

In another example, the time-ordered set may be obtained, at S10, in a test phase, e.g., in the industrial domain of transportation, and the product may be a part of an aircraft. In the test phase, the snapshots may be obtained from sensors built in the aircraft, and may further incorporate accompanying data, e.g., written reports from test pilots, written after a test, e.g., over the course of days.

In yet another example, the time-ordered set may be obtained, at S10, in operation of vehicle fleets. The snapshots may comprise, for example, warranty claims issued by users to the manufacturer. Each warranty claim may comprise a 2D picture of a vehicle accompanied by a textual description of the problem.

The method obtains, at S20, at least one recent snapshot. The at least one recent snapshot is time-ordered after at least one snapshot of the time-ordered set. In other words, the recent snapshot is chronologically ordered after at least one snapshot of the time-ordered set. The at least one recent snapshot may be obtained from the time-ordered set, or may be obtained from different systems (e.g., retrieved from a non-volatile storage, from a network, or from a sensor transmitting snapshots in real-time) and/or by different persons or entities. In any case, the at least one recent snapshot may comprise any indicator (implicitly or explicitly, such as a timestamp) of its chronological order with respect to the chronological order of the one or more snapshots comprised in the time-ordered set.

For example, in case in which the time-ordered set has been obtained in a production line in the industrial domain of welding or concrete building, the at least one recent snapshot obtained at S20 may be another snapshot taken from one of the industrial CT sensors at a time chronologically after at least one (e.g., all, if the recent snapshot is acquired in real time) of the snapshots of the time-ordered set.

In another example, the time-ordered set obtained at S10 may comprise snapshots taken at high frequency (e.g. the snapshots may be obtained from a few minutes, or hours between each other). The recent snapshot obtained at S20 may be obtained from the time-ordered set at any time during the test.

In yet another example, in case the time-ordered set has been obtained in operation of vehicle fleets this case, the at least one recent snapshot may be obtained at S20 from the time-ordered set, e.g., by obtaining a snapshot from the latest date of operation, with respect to the chronological order of the time-ordered set.

The method retrieves, at S30, a subset of one or more snapshots from the time-ordered set. The one or more snapshots (of the subset) are time-ordered before the at least one recent snapshot obtained at S20. The one or more snapshots of the subset satisfy, with respect to the at least one recent snapshot, a similarity above at least one of the one or more similarity thresholds. In other words, each snapshot of the subset is similar to the at least one recent snapshot, i.e., the measure of similarity of both a respective snapshot of the subset and the at least one recent snapshot is equal or greater than at least one of the one or more similarity thresholds. For example, the method may use any similarity metric (e.g., such as the inverse Euclidean distance or the cosine similarity metric) to compare the similarity between the one or more snapshots of the time-ordered set, the one or more snapshots of the subset being those snapshots of the time-ordered set whose similarity metric is above the predetermined similarity threshold.

The method determines, at S40, a trend from the retrieved subset (comprising the similar snapshots) at S30 and a baseline. A trend is a time distribution of the snapshots of the retrieved subset with respect to the baseline, and thus describes the variation of frequency of the snapshots over the baseline.

The baseline may be any collection of predetermined values or distribution of data, serving as a comparison for the one or more snapshots of the retrieved subset. The baseline may be obtained in any manner, for instance, it may be provided from contextual data of the production line, or may be obtained from a time window subset of the time-ordered set, consisting of one or more snapshots of the time-ordered set ordered chronologically before the snapshots of the subset. Alternatively, the method may also fit timestamps of the snapshots to a time series distribution model, e.g., a parametric statistical distribution, a machine-learning model or with a polynomial or exponential time series function.

The trend thus allows to capture the emergent problem of the product in the temporal frame determined by the chronological order set by the subset (that is, until the acquisition time of the at least one recent snapshot). If, for example, the emergent problem increases with respect to time, the trend indicates the emergence of a problem in the product. Thus, it is possible to determine whether the emerging problem is known or unknown, e.g., by performing an additional verification with respect to metadata of the snapshots, and/or comparing the result with previously detected problems . The method may also allow to set the baseline in any predetermined manner, thereby modifying the temporal window and/or the time distribution of the subset that is compared with the baseline. Thus, the method allows to modify the sensitivity of problem detection so as to modify the speed of detection of the emergent problem, e.g., by setting a short timeline for the baseline, and/or by setting a high similarity threshold. In addition, this also allows to select the type of emergence that should be detected, e.g. fast emerging problem versus slow emerging problem, or even persistent problems, for example, by changing the threshold for the ratio of frequencies of occurrences on the recent time window versus the baseline.

Compared to existing trend detection and sentiment analysis methods, the invention improves the sensitivity of detection of emerging problems. Indeed, the method allows to infer an emerging problem from a (relatively) small number of early occurrences. In other words, the method only needs to retrieve a relatively small subset of one or more snapshots of the time-ordered set so as to determine the trend.

Compared to existing weak signal detection based on explicit semantic analysis methods, the method achieves serendipity: the method allows to detect any type of problems, even ones that were not anticipated. In contrast with weak signal detection based on explicit semantic analysis methods, which require a specific category for a new type of problem, the method still detects the emerging problem, even if the category is not known.

Compared to existing weak signal detection based on anomaly detection methods, when categories are available to classify the detected problem, the invention allows to label the problem, which anomaly detection does not, as considering events in isolation does not allow for the same statistical analyses of the semantics of the events.

The method is particularly efficient in a context where multiple emerging problems may occur concomitantly, e.g., as is the case in manufacturing processes. Indeed, the invention efficiently discriminates each of the concomitant emerging problem, and hence improves the treatment of each emerging problem. For example, the method may detect a type for each of the discriminated emerging problem(e.g., as an emerging, persistent, emerging slower or faster type) and prioritize the treatment of the emerging problem according to the priority set for each type.

Thus, the trend determined by the method may be used for improving the manufacturing of the product. In an example application of the method for improving the manufacturing, when the product is manufactured in series, the method may obtain a time-ordered set comprising snapshots of batches of the product manufactured in series, i.e., snapshots (e.g., such as CT-Scans) of the product at all stages of the manufacturing in series. As the determined trend is a time distribution of the snapshots, it comprises specifications of the product at the time of manufacturing. When the determined trend is representative of an emergent problem (e.g., problems that may affect the quality of the product and/or its safety of use), the method may send the trend (comprising the specifications of the product) to a designer/engineer and/or to an automatic system, which may put (manually, semi-automatically or fully automatically) put on standby the batches of the product consistent with the problem detected by the determined trend. Then, the designer/-engineer may investigate the problem and perform an active correction, all thanks to the determined trend comprising the specifications of the product presenting the problem, and thereby performing a corrective action. Thereby, the method can be used for avoiding new occurrences of the problem detected by, e.g., the trend by pausing the manufacture of the product if the problem justifies it, and performing a full analysis to identify root causes in design or manufacturing and make corrections upstream by changing the manufacturing process, the design, and/or the maintenance process, to prevent the defect from occurring again. Thereby, the method can be used to anticipate and prevent problems downstream (e.g., in subsequent tests, or in operation, and/or while passing certification processes) and save costs by solving defects early.

In particular the manufacturing process may be fully automated and the method may allow halting production lines whenever a suspicion of an emerging problem arises. An operator would then check the data and decide to start the line again or take corrective action. This would for instance apply on high-stakes production lines, such as lines that process expensive materials, where quality is more important than throughput.

In another example application, the method may be used for detecting defects such as tear and wear of a machine in the production process, based on a trend determined by the method from snapshots of the product consisting of CT scans. Indeed, tear and wear on the production lines produce similar, recurrent incidents, that increase in frequency and detectability over time, rather than individual outliers. This makes the detection of the trend reliable and representative of problems related to tear and wear. The user can then fix the elements of the machine subject to tear and wear to fix the problem.

In another example application, the method may be used for detecting defects in a production process, based on a trend determined by the method from snapshots of the product consisting of CT scans, where the defects may be due due to an evolution of the behavior of a human operator or an autonomous robotic operator. Such behaviors can slowly evolve due to adaptive feedback loops, and produce new patterns on the 3D of the product for which quality is not guaranteed. This is the case, for example, in welding inspection. Thus, in the context of welding inspection, as the method obtains a trend representative of the defects of the product, the user is guided by the method to ensure that the quality of the product returns to an acceptable level.

In another example application, the method may be used for detecting defects due to incorrect lubrication of a machining tool. Looking at the temperature of the tool with regards to a fixed threshold is not a reliable indicator of a production problem. To detect a production problem involving the temperature of the rotating tool, one must consider the evolution of this indicator together with timed values of applied pressure, temperature, rotating speed, and the material of the work; and one must consider those parameters across multiple runs. The method allows to solve this problem by inferring (that is, detecting) the trend from the time-ordered set and the one or more similarity thresholds, by using, e.g., similarity signatures computed by vectorizing these time series, and merged with metadata characterizing the run. Thereby, the operation of the machine can take into account the defects, and apply a corrective action by concentrating on the parts of the machine presenting the problem. This improves ergonomics of maintenance of the machine, as time is saved in searching for parts of the machining tool presenting the problem.

In another example application, the method may be used for detecting latent problems on the rotors of a hydroelectric power plant due to incorrect maintenance processes in operation. For example, the temperature of a part of the rotor is not be problematic in itself, but may present problems when taking into account other parameters such as pressure, flow rate, generated power. Due to this plurality of parameters, other external parameters present in the operation of the rotors may create temperature variations that "hide" other problems that are not easily detectable by direct measurements. In this case if there is no natural split of the signal in time (analogous to a job in the case of the machine tool) the signal can be arbitrary split into sufficiently short lived time segments, each of which with its own similarity signature. The method can take advantage of this to improve the accuracy of the detection of the hidden problems, as the determination of the trend takes into account the baseline. This improves ergonomics of maintenance and safety of operation of the rotor, as time is saved in searching for parts of the machining tool presenting the problem and that it avoids taking the rotor out of service unnecessarily.

Further aspects of the similarity thresholds are now discussed.

The one or more similarity thresholds may each be based on one or more similarity signatures of the one or more snapshots of the time-ordered set. A similarity threshold is the minimum similarity measure between two snapshots to consider that they are similar. For example, the method may perform a query by similarity based on one will retrieve the other if their similarity is above the similarity threshold. The similarity between two snapshots is computed based on their signatures. A similarity signature may encode one or more physical characteristics of the product. The similarity signature may be computed from a snapshot of the product, or may be provided as part of the information described in the snapshot (e.g., associated to the snapshot in the time-ordered set). The similarity signature may be obtained by processing one or more physical characteristics of the product represented in the snapshot. Thus, the signature may be multi-dimensional, e.g., more than 100 dimensions or more, yet 1.000 or more. The one or more physical characteristics of the product may be represented in the snapshot via the shape of the product represented in the snapshot, also color or texture, or by any other data incorporated to the snapshot, e.g., text comprised in annotated logs. The similarity signatures thus allow to give a degree of similarity between snapshots of the time-ordered set in accordance to the encoded physical characteristic.

The one or more similarity thresholds may be additionally based on a predetermined threshold on a number of the one or more snapshots of the product comprised in the time-ordered set. In other words, the similarity thresholds (used for retrieving the subset at S30), depend on the density set by the number of the one or more snapshots of the product. Hence, the method modifies the sensitivity of the method for retrieving similar snapshots in a statistically significant manner. Indeed, the method may, for example, set a minimum support, that is, the number of the one or more snapshots of the product is a minimum number representing an average density that is considered to be statistically significant. In other words, thanks to the minimum number, it can be ensured that two snapshots having been found to be similar is not an event with low probability of happening, and rather representative of the product (e.g., during the actual production line). In another example, the method may sample randomly a subset of n snapshots of the time-ordered set (prior to obtaining the at least one recent snapshot), and obtain a median similarity measure between the n randomly retrieved snapshots. The median similarity measure may be used as a basis for determining the threshold.

The one or more similarity signatures may be obtained from a neural network architecture applied to a respective snapshot of the product. The neural network architecture may be, e.g., deep learning architecture, autoencoder architecture, transformer architectures or context sensitive autoencoder. The neural network architecture may be trained to process (through a series of complex computations) the one or more physical characteristics of the product (captured by the snapshots of the time-ordered set), and to output a vector of values that comprises outstanding patterns of data.

The one or more similarity signatures may encode one or more of: information on the distribution of the product, information of the response of the product to a physical stimulation and/or a text description of the product.

For example, the snapshot may be a 2D representation, such as a 2D image. In this case, the method may obtain a similarity signature from a 2D convolutional networks. In other words, the method may compute the similarity signature by applying the 2D convolutional network or by obtaining a similarity signature output from the 2D convolutional network. The 2D convolutional network may be a network used in image classification, in the case where labels are available. The similarity signature, encoding the information of the distribution of the product represented in the snapshot, may be the output of the layer just before the output. The method may use an adversarial network in the case where there are no available labels. The adversarial network may be trained to distinguish between real images and synthetic images and to generate realistic synthetic images at the same time. Adversarial networks may jointly train a generator network that generates images, and a discriminator network that classifies whether the image is real of generated. In this case, the method may obtain the similarity signature from the layer of the discriminator before the output. The method may also use a transformer network to compute the similarity signature.

In another example, the snapshot may be a 3D representation, such as a 3D shape. The method may use, for example, point cloud vectorization methods such as PointNet, to obtain the similarity signatures.

In another example, the snapshot may include text (e.g., a warranty claim including text). To take into account text for obtaining the signature, the method may se, e.g., the BERT language model and a tfidf vectorization. The BERT model captures meaning of the text, even when expressed with different forms of language, including negation. The tfidf vectorization is trained on the set of snapshots to capture specific jargon that the BERT model might not capture. Hence, the method is provided with an alternative to fine-tune or fully training the BERT model on the time-ordered set, which requires a lot of data, and GPU time.

Examples of aspects of the determination of the trend are now discussed.

Determining the trend at S40 may further comprise computing the time distribution with respect to the baseline by determining a ratio between the one or more (similar) snapshots of the subset and a predetermined baseline time-ordered set that may be a predetermined time-ordered set of snapshots of the product. The predetermined time-ordered set of snapshots of the product are thus chronologically ordered.

The predetermined time-ordered set of snapshots of the product may thus be seen as a reference time window that serves for comparing the retrieved subset and the baseline and thus determine the time distribution of the snapshots of the retrieved subset with respect to the baseline. The chronological order of the predetermined baseline time-ordered set may be set in any manner. For example, the chronological order may comprise an initial time and a final time. Bot the initial time and the final time may be seen as defining a maximum age for detecting an emerging problem, with respect to the time of the at least one recent snapshot. In addition, the predetermined baseline time-ordered set may comprise any predetermined number of snapshots.

The method hence determines a ratio between the one or more snapshots of the subset and a predetermined baseline time-ordered set. In other words, the method determines the relationship between the number of snapshots of the retrieved subset and the number of snapshots of the predetermined baseline time-ordered set, and that may express how much the number of snapshots of the retrieved subset is bigger (or smaller) than the number of snapshots of the predetermined baseline time-ordered set. The determination of the ratio may be performed by dividing the number of snapshots of the retrieved subset and the number of snapshots of the predetermined baseline time-ordered set.

The method thus improves the accuracy of inference of an emerging problem. Indeed, the initial time and final time modify the sensitivity of the method to "forget" old snapshots, i.e., old with respect to the at least one recent snapshot, and thus modifies the sensitivity of the method to detect the resurgence of emerging problems that where occurring in the past. In other words, the method essentially treats recurrent emerging problem as a new emerging problem, so as to allow to determine a new trend (without dependence on past memory, which may bias the trend). In addition, the predetermined baseline time-ordered set may comprise any predetermined number of snapshots, and thus modifies the sensitivity of the method to detect the speed of evolution of an emergent problem.

Compared to existing weak signal detection based on anomaly detection methods, the method also reduces the occurrence of false positives. Individual events corresponding to false positives may not be problematic themselves or produce problems downstream. Moreover, false positives may not repeat. Hence, false positives cannot be linked to a choice of design or industrial process which remains or repeats on multiple products or batches. Existing anomaly detection methods triggers alerts for each individual event that appears as anomalous with respect to all of the snapshots of the time-ordered set. However, false positives may be outliers that are meaningless with respect to the overall production process. Thanks to the trend being a time distribution of the snapshots of the retrieved subset with respect to the baseline, the method avoids the generation of false positives. As an emerging problem is a group of events over time, the method performs an a posteriori analysis on the group, and identifies a posteriori the data that is most relevant to characterize the group versus the rest of the snapshots in the time-ordered set. This results in an improved handling of the emerging problem, as the method avoids unnecessary human validation workloads, which accelerates productivity, especially in the context of improving design choices and production, test or maintenance processes.

In addition, compared to existing weak signal detection based on anomaly detection methods, the method also reduces the occurrence of false negatives: individual events may not appear anomalous in isolation; but a growing number of very similar such events may indicate a problem that anomaly detection may not detect. These false negatives, in the case of anomaly detection, may produce undetected problems that repeat downstream in the production cycle, or in operation. As the method reduces the occurrence of false negatives, it significantly reduces the probability of the occurrence of undetected problems.

The determination of the trend at S40 may further comprise computing the time distribution by fitting the snapshots of the retrieved subset to a time-series distribution. By fitting, it is meant modifying parameters of the time-series distribution so that it fits the temporal frequency of the similar snapshots. For example, the time-series distribution may be a parabolic distribution of the form $f(x - d) = a + bx + cx^2$, where the function f is the frequency of occurrence of the snapshots of the retrieved subset x; a, b, c and d are adjustable parameters. The method may modify the adjustable parameters so that the temporal frequency of the similar snapshots is best approximated by the function f. This may modify the sensitivity of the method to "forget" old snapshots, i.e., old with respect to the time-series distribution.

The determination of the trend at S40 may further comprise computing the time distribution by defining a function (having an input and output) that takes the one or more snapshots of the subset as input. The output of the function may be compared to a probability distribution. The comparison may determine a ratio between one or more values of the output of the function and one or more predetermined baseline values of the probability distribution. The method is thus able to infer any statistical divergence between the output of the function and the one or more predetermined baseline values, so as to verify a regime change. The function may be any statistical function applied to the snapshot so as to compare the output to the baseline values of the probability distribution. For example, the method may perform the comparison using a Chi-square test (and test a goodness of fit of the output of the function and the predetermined baseline values), or using a divergence metric, such as a Kolmogorov-Smirnov test. Thus, the method allows a great flexibility for inferring emerging problems, thanks to the statistical comparison on the probability distribution. The method may be quite flexible for inferring the trend. For instance, the method may admit a multi-dimensional probability distributions (e.g., by using a multi vectorial representation), and the method may admit different configurations on the temporal frame set by the time-series distribution. Hence, the method may schedule multiple inference jobs with different configurations. The inference jobs will simply run concurrently, but detect different problems. This is thanks to the multiple inference jobs, made by the method with different configurations.

The method may comprise computing one or more labels for each of the one or more snapshots corresponding to the determined trend. A label is a piece of information that contains information indicative of the emerging problem determined in the trend. In other words, the label contains information on the snapshots of the retrieved subset that presents a discrepancy with respect to the physical characteristics of the expected behavior of the product (e.g., compared with nominal operation regimes).

Computing the one or more labels may comprise obtaining metadata from each of the one or more snapshots. Each respective metadata may be a piece of data (e.g., a categorical field taking a finite number of values or textual data) comprising one or more ranges of physical values of the product. Thereby, the metadata may be representative of the emerging problem. For example, the method may obtain metadata from values of categorical fields, or words and/or expressions from textual fields associated with the snapshot.

The computing may also comprise associating, to each of the one or more snapshot, data pieces each corresponding to the obtained metadata.

The method thus attaches, to each snapshot representative of the trend, metadata that characterizes the physical properties of the emerging trend. The user may thus be presented with information necessary to apply a corrective action, either during the production line, test phase, or during operation.

The method may also comprise obtaining a first distribution of the obtained metadata over the retrieved snapshots. The method may also comprise obtaining a second distribution of the obtained metadata over the dataset. The method may associate data pieces. Each data piece may correspond to obtained metadata for which the obtained first and second distributions are different. The user is thus presented (e.g., as a human-readable label) with metadata that best describes the physical properties of the cases representing the trend.

The method thus associates the inferred emerging problem with contextual data (in form of the labels) that allows validation and handling by an expert. Thanks to the automation achieved by the method, analysis time by experts is sped up. Indeed, the method provides sets of individual occurrences of the problem to let the experts decide on the best course of action for solving the problem. The automation improves response times over previous approaches that required a manual construction of a set of cases, which may be prone to human bias.

The method may further comprise performing a consistency check of the obtained metadata with metadata of the recent snapshot. Thus, the consistency check verifies (e.g., by numerical comparison of the values) that the one or more ranges of physical values of the product comprised in the metadata of the retrieved snapshots is consistent to the one or more ranges of physical values comprised in the metadata of the recent snapshot. Thereby, the consistency check allows to check whether the recent snapshot is representative of the trend. For example, if the retrieved subset presents the problem, and if the recent snapshot present physical properties indicative that the product has returned to a normal operation (the problem no longer being present), the recent snapshot is no longer representative of the trend. The consistency check may also verify that the recent snapshot is representative of the same (or similar product) as the product captured in the retrieved snapshots, e.g., in the case of failure of a fleet of vehicles of a same model.

Examples are now discussed, with reference to FIG.s 2 to 4.

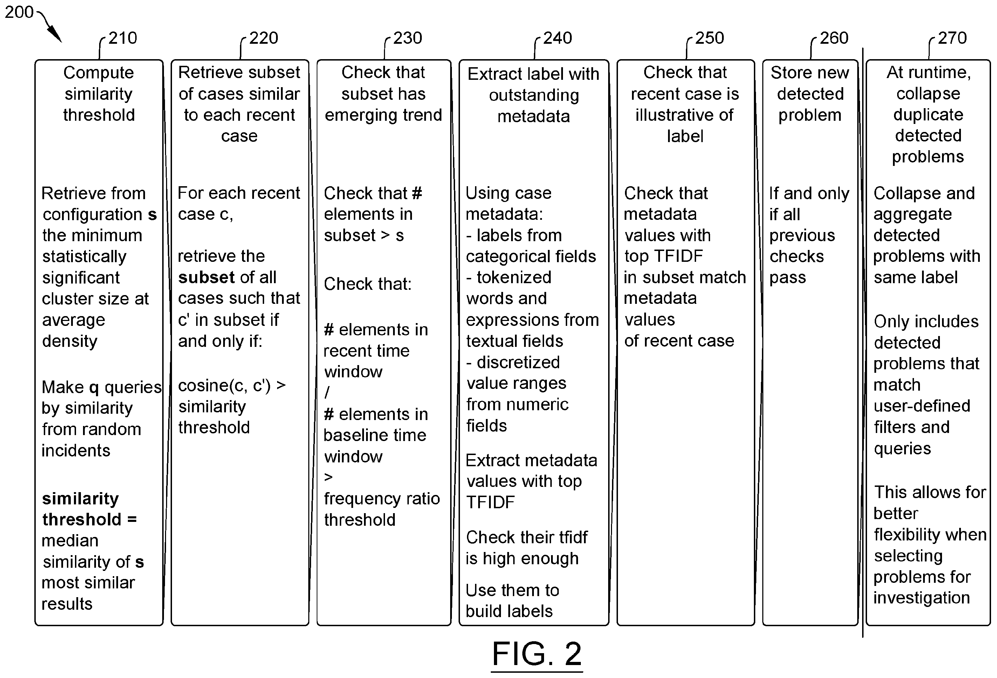

FIG. 2 shows an implementation of the method. Here, the time-ordered set provided at S10 has precomputed similarity signatures for every snapshot.

At 210, the implementation computes the predetermined similarity threshold for the snapshots of the time-ordered set provided at S10. The method may retrieve a minimum number of snapshots s. Said minimum number is a minimum statistically significant subset (or cluster), whose size sets an average density. At 210, the method may perform q queries for each precomputed similarity signature, from randomly sampled snapshots. The method may set the predetermined similarity threshold as the median similarity of the most similar results, according to the q queries.

At S220, the method retrieves the subset of cases similar cases for a given recent case provided at S20. For a given recent case c, the method may retrieve the subset of snapshots that satisfy a similarity above the one or more similarity thresholds determined at 210. The method may use the cosine metric distance to verify the similarity. That is, for a given recent snapshot c, a snapshot of the time-ordered set $c'$ satisfies the predetermined similarity threshold $similarity\_threshold$ if $cos(c,c')>similarity\_threshold.$ The method may thus keep the subset stored in memory prior to proceeding to the subsequent steps.

The method proceeds, at 230, to determine the trend of the emerging problem. The method may first check that the number of elements in the subset obtained at 210 are greater than a given number s. Then, the method may verify that the ratio number of elements of the subset and the number of elements in a baseline time window are above a frequency ratio threshold. This allows to forget old problems. The method may determine the trend using any of the methods describe here.

The method may extract, at 240, a label with outstanding metadata, for all of the elements in the trend. The method may use, as metadata for each snapshot: a label from categorical field, tokenized words and expressions from textual fields, discretized value ranges. The method may also extract metadata values with top term frequency-inverse document frequency (TFIDF) methods.

The method may check, at 250, that the recent snapshot is illustrative of the label, by checking that metadata values with top TFIDF in the subset match metadata values of the recent case.

The method may store, at 260, the detected emergent problem represented by the trend. The snapshots are stored if all the previous steps have been performed successfully.

The method may be used in runtime operations by collapsing and aggregating detected problems with the same label. The method only includes detected problems that match user-defined filters and queries.

The generation of similarity signatures is now discussed

Similarity signatures encode reported cases with several types of data (3D, 2D, time series, textual description, textual categories, dates, numerical values) into fixed-size vectors in a high dimensional space (for example 1000 dimensions). The similarity signatures encode the information contained in the snapshots. That information is distributed in the vectors in such a way that a measure of similarity will group cases according to the intrinsic physical similarities of the product.

For example, the similarity signatures may be computed from products found in the following contextual scenarios:

- Detecting problems in the operation of vehicle fleets: car users issue warranty claims to their manufacturers, in which they describe the issue using a textual description, and pictures. They may also fill a form that forces them to pick predefined values that serve as metadata and can be integrated in the signature as well. In this case the signature may be obtained from a mix of a vectorized representation of the text, images. Any metadata can be encoded in the signature (comprising, for example, information on the affected part, the brand of the vehicle, model of the vehicle, date of the incident, incident location, etc.);

- Detecting problems in the test phase on aircrafts: test pilots write reports after each test. The reports include forms and free text, and are associated with the time series recording of many sensors built in the aircraft. In this case the signature will be obtained by a mix of vectorized representation of the text, the time series, merged together with other form metadata and context metadata (e.g. weather);

• Detecting problems in a specific step of the production line based on 3D or 2D scans of the product being manufactured, or part of it. This could be done by means of industrial computed tomography or industrial radiography. Typically, all or a sample of the products run through a scanner as part of the production line. In the case of industrial radiography/tomography, scanners are typically already in place to inspect for known types of problems such as void or bubbles in the domains of welding or concrete building. With the method of the invention, their output can be used to detect unanticipated types of problems. Their output is vectorized with different techniques depending on whether it is 3D or 2D, and merged into a similarity signature along with the metadata of the product or the order, including its configuration, due date, operator identification, suppliers or batch numbers of its parts, etc.

To generate a similarity signature from text, the method may use both a BERT language model and a TFiDF vectorization. The BERT model captures meaning precisely even expressed with different forms of language, including negation. The TFiDF vectorization is trained on the set of snapshots to capture specific jargon that the BERT model might not capture. This is an alternative to fine-tuning or fully training a BERT model on the set of snapshots, which requires a lot of data, and GPU time.

To generate a similarity signature from images, the method may use, for instance, 2D convolutional networks. These networks are classically used in image classification when labels are available. The encoding is the output of the layer just before the output. If no labels are available, adversarial networks may be used, e.g. trained to distinguish between real images and synthetic images and to generate realistic synthetic images at the same time. Adversarial networks jointly train a generator network that generates images, and a discriminator network that classifies whether the image is real of generated. The layer of the discriminator before the output can be used as an encoding. Since recently, transformer networks have also been used to encode images for similarity.

To generate a similarity signature from 3D shapes, the method may use known state of the art methods, such as point cloud vectorization (e.g., such as PointNet) or convolutional networks. Point cloud vectorization is discussed, for example, in Qi, Charles R., et al. "Pointnet: Deep learning on point sets for 3d classification and segmentation." Proceedings of the IEEE conference on computer vision and pattern recognition. 2017. Convolutional networks are discussed, for example, in Xu, Haotian, Ming Dong, and Zichun Zhong. "Directionally convolutional networks for 3D shape segmentation." Proceedings of the IEEE International Conference on Computer Vision. 2017.

The method may merge the vectors into a joint signature, and use a stacked context sensitive autoencoder. It learns to reproduce the input in output, after encoding it in a middle layer whose length is smaller than the input, hence learning to compress it at the same time. The output of the middle layer serves as the signature. The input of the autoencoder is a vector obtained by concatenating the vectors to merge.

The computation of the similarity signatures is optional if pre-existing similarity signatures exist. Alternatively, pre-existing signatures, or any preexisting vector representation of snapshots can also be taken as input and merged with computed signatures in the "merge" step.

The method may schedule the inference of emergent problems, and query documents by date. The method may retrieve recent snapshots regularly, to infer a trend for each retrieved recent snapshot.

For performance reasons, when the frequency of snapshots justifies it, the method may retrieve batches of recent snapshots and apply the analysis on each element of the batch (instead of retrieving individual documents).

The method may execute a query regularly and filter on the age of the snapshots to only query the snapshots that occurred after the previous analysis. This ensures that snapshots will be processed no longer than a certain time after they occur. An alternative is to carry out the analysis for each snapshot as it occurs (as it is logged), or for each batch of documents where a certain number of snapshots (batch size) is available. It is possible to mix both approaches in order to manage both the max delay before a snapshot is analyzed, and the max size of a batch to process in each job.

The determination of the similarity threshold is now discussed.

The similarity threshold is a lower limit to similarity after which a snapshot of the set is too dissimilar from the recent snapshot to be retrieved.

There may be many ways to determine this threshold.

• The method may determine the similarity threshold as follows: a user selects n the minimum support at average density. N is typically chosen between 10 and 100. This is the minimum number of snapshots in a cluster of average density for the cluster to be considered as statistically significant (and not a set of similar cases that occurred by chance). This is for an average density cluster, so denser clusters with more snapshots can be considered. Since the threshold is calculated based on the average or median similarity in clusters of size N, the threshold allows to retrieve more snapshots in denser areas.

• Prior to problem detection, a number of random similarity queries (typically 10) are run on the set of snapshots. The median similarity measure between the *n-th* most similar snapshots with the snapshot of the query is used as the threshold.

The reason behind this convoluted method is that the method does not have any control on the similarity values. Since the encoding is done by a neural network and its dimensions do not correspond to explainable variables, it is impossible to explain or conceptualize the value of the similarity between two snapshots. The method thus speak to the user in terms of a cluster size.

The determination of the subset at S30 is now discussed.

The similar snapshots are retrieved from an index in the time-ordered set, typically optimized for search by similarity. The similarity between two snapshots is computed based on their similarity signatures.

The metric is typically the cosine similarity, although the inverse of the Euclidean distance can also be used interchangeably.

In this step, for each recent snapshot, we retrieve the most similar snapshots. Specifically, we retrieve the snapshots whose similarity with the threshold is above the similarity threshold.

It is possible to ignore problems that are too old (they can pollute the data and prevent algorithm from detecting resurgence of old problems) by combining a filter on dates with the similarity search.

The determination of the trend is now discussed.

Once the subset has been retrieved, the subset goes through several checks before we conclude (or not) that it characterizes a trending problem for which the recent snapshot is a representative example. The checks may be as follows:

- labelling the cluster and checking that the recent snapshot is consistent with the label(s),
- identifying whether the cluster has the desired trend,
- optionally, checking that the same problem has not been detected recently.

Only if these checks are passed does the cluster result in the detection of a problem, that is, the creation and storage of an object of type "detected problem".

The labelling the cluster is now discussed

This part is in two steps that serves two purposes:

    1. extracting metadata representative of the retrieved cases; to serve as metadata of the problem,
    2. computing a user-readable summary of the problem.

Step 1 is done using discrete case metadata. In this step, the extraction of the metadata extracts:

- values from categorical fields (categorical fields are fields that take a finite number of unordered values),
- words and expressions from textual fields. The method can obtain words can be obtained using state of the art tokenizers, and multi-word expressions can be obtained using state-of-the-art phrase detection methods. For example, as discussed in https://courses.engr.illinois.edu/cs447/fa2018/Slides/Lecture17HO.pd f,

- value ranges for numeric fields.

In order to identify metadata values representative of the retrieved cases, the method may select the most frequent values (highest count). But this method is subject to bias as frequent values overall will tend to appear too often even if they are not characteristic of the retrieved cases. To avoid these biases, it is possible to use a TFIDF measure or a variant, a simple way to do it is to normalize the count by dividing it by the number of occurrences of the value on the whole set of cases, or by the number of cases in which it appears. Other relevant metrics and algorithms include YAKE!

The resulting metadata are the ones that best characterize the retrieved cases. In order to check that that combination of metadata can be used to characterize the cluster; one can enforce a min threshold on the measure of representativity. If the threshold is not attained, one can either not create a problem detection (not detect the problem) or simply not accept the metadata as characteristic of the problem.

Step 2 consists in creating a human readable label for the problem.

This can be done by combining the metadata representative of the problem, for example using a text with blanks. For example if characteristic metadata exists on the following fields: model, part, problem keywords, the following title can be generated:
"Problem involving [characteristic keyword] on [characteristic part] of model [characteristic model]"

Another option, if descriptive text is available, is to generate a summary using state of the art summarization techniques, as discussed in Gambhir, Mahak, and Vishal Gupta, "Recent automatic text summarization techniques: a survey", Artificial Intelligence Review 47.1 (2017): 1-66.

The verification that the recent snapshot is consistent with the cluster label and metadata is now discussed.

In this step, the method may check that the recent snapshot that triggers the problem detection is consistent with the problem metadata. That is, on the fields on which characteristic metadata exists for the problem, the values of these fields for the recent snapshot are part of the characteristic metadata of the retrieved snapshots.

If not, the method does not consider that a problem was detected, so we do not create a detected problem object. The assumption is that if the problem described by the characteristic metadata is still active, there will be more occurrences with the same metadata, and the problem will be detected later.

The method retrieves dates of snapshots similar to the recent snapshot (within the limit of the similarity threshold) and to compute if the distribution of dates should raise an alert about emerging problem. To do this, the user has defined thresholds to determine that the problem has a trend that makes it worth looking at.

The method may do this in any of the following ways. For example, the method may fit the retrieved timestamps to a time series distribution and comparing the obtained parameters of the distribution with predetermined values.

The method may detect a regime change: fitting a probability distribution on a baseline time window and testing that the distribution on a recent time window is the same (e.g. using a Chi Square test) or comparing both distributions using a divergence metric (e.g. Kolmogorov Smirnov). The method may let the user specify a recent time window (max age of recent occurrences) and baseline time window (max age).

The method may also count the number of retrieved timestamps in one or several time windows and compare the result(s), or a function of the result(s), to predetermined values. The method may also let the user specify a recent time window (max age of recent occurrences) and baseline time window (max age). Alternatively or additionally, the method may let the user specify the minimum number of cases in each time window, and the minimum ratio in recent versus baseline time windows.

This allows the user to configure the system to detect different types of problems (persistent, emerging) at different speeds of evolution. It is essential to let users tune these parameters since what is recent or not, as well as the relevant speed of the trend, will depend on the industrial context. The ratio can be seen as the parameter that will adjust sensitivity of the method.

The max age, or baseline time window, gives the method the ability to "forget" old enough snapshots, and thus to detect resurgence of problems that were occurring in the past, were fixed, and start reappearing. In such a case, the max age will prevent a too large number of past occurrences to bring the ratio down and hide the resurgence. The ratio may be computed according to the formula:

$$ratio = \frac{\#recent\,frame}{\#baseline\,frame}$$

Here, *#recentframe* means the number of snapshots in the recent time window and *#baselineframe* means the number of snapshots in the baseline time window.

If the user is interested in multiple types of trends, they will schedule multiple problem detection jobs with different configurations. The jobs will simply run concurrently; potentially retrieve the same clusters; but detect different problems because the checks on the trend in the cluster will be different.

The verification of duplicate detection of trends a posteriori is now discussed.

This check may be performed by the method by querying the set of detected problems and checking for duplicates. The check for duplicates can be done in multiple ways

- by comparing the corresponding labels,
- by comparing the corresponding metadata,
- by comparing the distribution of metadata of their snapshots,
- by comparing the distribution of the similarity signatures of their snapshots.

The method may choose not to do the check, thereby possibly detecting duplicate problems by default. However, wherever the user visualizes detected problems, or syntheses thereof, similar detected problems are collapsed / aggregated at runtime prior to display of lists or syntheses.

This is equivalent to running the same check, but at runtime instead of at detection time. It allows for finer grained filtering and more flexibility in the definition of what constitutes a duplicate problem.

The storage of the detected problem and further action is now discussed.

The method may push notifications to specific users, groups, discussion threads, or applications in the same process that detects the problem. However, the method may chose only to implement a problem detection job only stores the detected problems. Hence, it is the responsibility of other applications, or other parts of the application to decide what should be done with the detected problems, such as sending a notification, an email, issuing an automated post in a community, etc.

Users can also subscribe to certain types of detected problems in the application, by defining filters on the list of recently detected problems, and filter in / out specific detected problems from their analytic dashboards.

When a problem is detected, the method may automatically put on standby the batches consistent with the occurrences of the problem, prior to investigation

In the queue of jobs to be processed, remove the jobs with metadata that correspond to the metadata of the label of the problem, and store them in the "standby" queue. Typically, after investigation, a decision will be taken, by an expert, to process the jobs or cancel them.

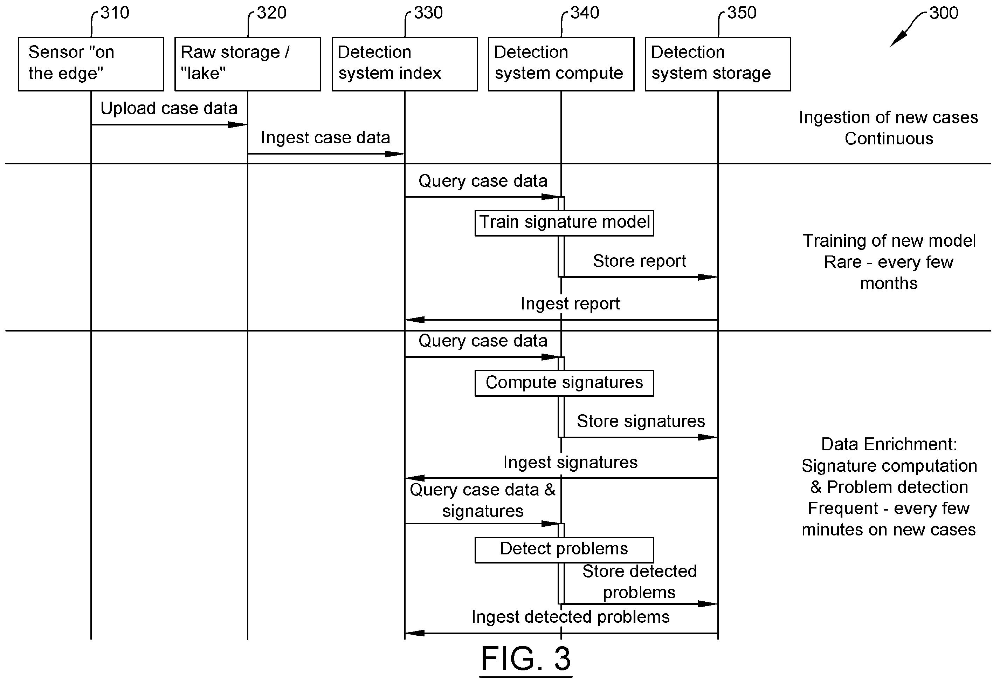

FIG. 3 illustrates the construction of the time-ordered set.

The method may ingest snapshots to construct the time-ordered set. This may be performed as a continuous process in which the method may acquire snapshots 310 from a sensor on the edge, i.e., on the production premises. The method may store the snapshots into a raw storage (also called "lake") at 320. The method may detect the system index at 330 to construct the time-ordered set.

The method may process the data at 340 by computing similarity signatures. The method may serve from the raw storage to train a signature model such as an autoencoder, that computes the similarity signature. In other words, the method may set part of the data in the raw storage for training the model, and another part to obtain the time-ordered set. The method may thus compute the similarity signatures for the elements on the raw storage, and hence enrich the data by incorporating similarity signatures to the snapshots, which are then transmitted to the method at 350.

A typical example of computer-implementation of the method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

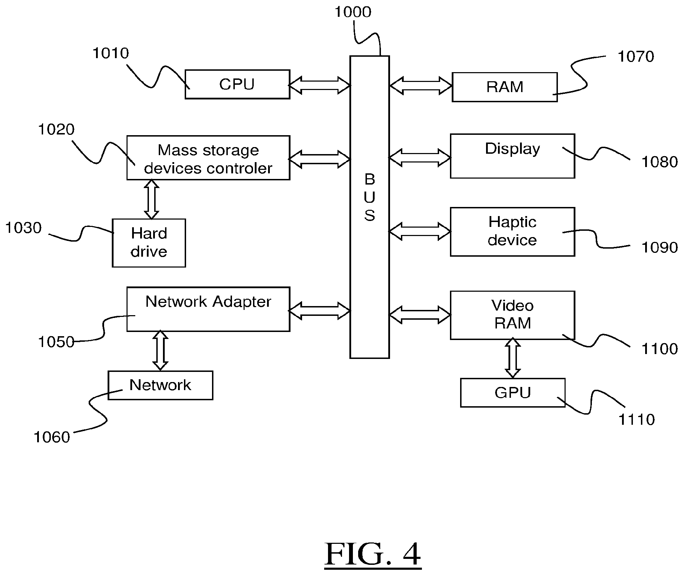

FIG. 4 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for inferring an emerging problem in product manufacturing, the method comprising:

   - obtaining (S10) a time-ordered set comprising one or more snapshots of a product and one or more similarity thresholds;
   - obtaining (S20) at least one recent snapshot, the at least one recent snapshot being time-ordered after at least one snapshot of the time-ordered set;
   - retrieving (S30) a subset of one or more snapshots from the time-ordered set, the one or more snapshots being time-ordered before the at least one recent snapshot and satisfying, with respect to the at least one recent snapshot, a similarity above at least one of the one or more similarity thresholds, each of the one or more similarity thresholds being based on one or more similarity signatures of the one or more snapshots of the time-ordered set, the one or more similarity signatures encoding one or more physical characteristics of the product;
   - determining (S40) a trend from the retrieved subset and a baseline, the trend being a time distribution of the snapshots of the retrieved subset with respect to the baseline.

2. The method of claim 1, wherein determining (S40) the trend further comprises computing the time distribution with respect to the baseline by determining a ratio between the one or more snapshots of the subset and a predetermined baseline time-ordered set, the predetermined baseline time-ordered set being a predetermined time-ordered set of snapshots of the product.

3. The method of claim 1 or 2, wherein determining (S40) the trend further comprises computing the time distribution by fitting the snapshots of the retrieved subset to a time-series distribution, and comparing the computed time distribution to one or more predetermined baseline values.

4. The method of any one of claims 1 to 3, wherein determining (S40) the trend further comprises computing the time distribution by defining a function that takes the one or more snapshots of the subset as input, the output of the function being compared to a probability distribution that determines a ratio between one or more values of the output of the function and one or more predetermined baseline values of the probability distribution.

5. The method of claim 4, wherein the one or more similarity thresholds are additionally based on a predetermined threshold on a number of the one or more snapshots of the product comprised in the time-ordered set.

6. The method of claim 5, wherein the one or more similarity signatures are obtained from a neural network architecture applied to a respective snapshot of the product.

7. The method of any one of claims 5 to 6, wherein the one or more similarity signatures encode one or more of:

   - information on the distribution of the product;
   - information of the response of the product to a physical stimulation; and/or
   - a text description of the product.

8. The method of any one of claims 1 to 7, further comprising computing one or more labels for each of the one or more snapshots corresponding to the determined trend, the computing comprising:

   - obtaining metadata from each of the one or more snapshots, each respective metadata comprising range(s) of physical values of the product and being representative of the emerging problem;
   - associating, to each of the one or more snapshot, data pieces each corresponding to the obtained metadata.

9. The method of claim 8, further comprising obtaining a first distribution of the obtained metadata over the retrieved snapshots and a second distribution of the obtained metadata over the dataset, and associating data pieces each corresponding to obtained metadata for which the obtained first and second distributions are different.

10. The method of claim 8 or 9, further comprising performing a consistency check of the obtained metadata with metadata of the recent snapshot.

11. A computer program comprising instructions for performing the method of any of claims 1 to 10.

12. A computer readable storage medium having recorded thereon a computer program of claim 11.

13. A system comprising a processor coupled to a memory and a graphical user interface, the memory having recorded thereon the computer program of claim 11.

**Patentansprüche**

1. Computerimplementiertes Verfahren zur Ableitung eines neuen Problems bei der Produktherstellung, wobei das Verfahren Folgendes umfasst:

   - Erhalten (S10) eines zeitlich geordneten Satzes, umfassend eine oder mehrere Momentaufnahmen eines Produkts und einen oder mehrere Ähnlichkeitsschwellenwerte;
   - Erhalten (S20) mindestens einer aktuellen Momentaufnahme, wobei die mindestens eine aktuelle Momentaufnahme nach mindestens einer Momentaufnahme des zeitlich geordneten Satzes zeitlich geordnet ist;
   - Abrufen (S30) eines Teilsatzes einer oder mehrerer Momentaufnahmen aus dem zeitlich geordneten Satz, wobei die eine oder mehreren Momentaufnahmen vor der mindestens einen aktuellen Momentaufnahme zeitlich geordnet sind und mit Bezug auf die mindestens eine aktuelle Momentaufnahme eine Ähnlichkeit über mindestens einer des einen oder der mehreren Ähnlichkeitsschwellenwerte erfüllen, wobei jeder der einen oder mehreren Ähnlichkeitsschwellenwerte auf einer oder mehreren Ähnlichkeitssignaturen der einen oder der mehreren Momentaufnahmen des zeitlich geordneten Satzes basiert, wobei die eine oder mehreren Ähnlichkeitssignaturen eine oder mehrere physische Eigenschaften des Produkts kodieren;
- Bestimmen (S40) eines Trends aus dem abgerufenen Teilsatz und einer Basislinie, wobei der Trend eine zeitliche Verteilung der Momentaufnahmen des abgerufenen Teilsatzes mit Bezug auf die Basislinie darstellt.

2. Verfahren nach Anspruch 1, wobei das Bestimmen (S40) des Trends weiter das Berechnen der zeitlichen Verteilung mit Bezug auf die Basislinie durch Bestimmen eines Verhältnisses zwischen der einen oder den mehreren Momentaufnahmen des Teilsatzes und eines vorbestimmten, zeitlich geordneten Basisliniensatzes umfasst, wobei der vorbestimmte, zeitlich geordnete Basisliniensatz ein vorbestimmter, zeitlich geordneter Satz von Momentaufnahmen des Produkts ist.

3. Verfahren nach Anspruch 1 oder 2, wobei das Bestimmen (S40) des Trends weiter das Berechnen der zeitlichen Verteilung durch Anpassen der Momentaufnahmen des abgerufenen Teilsatzes an eine Zeitreihenverteilung und das Vergleichen der berechneten zeitlichen Verteilung mit einem oder mehreren vorbestimmten Basislinienwerten umfasst.

4. Verfahren nach einem der Ansprüche 1 bis 3, wobei das Bestimmen des Trends (S40) weiter das Berechnen der zeitlichen Verteilung durch Definieren einer Funktion umfasst, die die eine oder mehreren Momentaufnahmen des Teilsatzes als Eingabe verwendet, wobei sie Ausgabe der Funktion mit einer Wahrscheinlichkeitsverteilung verglichen wird, die ein Verhältnis zwischen einem oder mehreren Werten der Ausgabe der Funktion und einem oder mehreren vorbestimmten Basislinienwerten der Wahrscheinlichkeitsverteilung bestimmt.

5. Verfahren nach Anspruch 4, wobei der eine oder die mehreren Ähnlichkeitsschwellenwerte zusätzlich auf einem vorbestimmten Schwellenwert für eine Anzahl der einen oder der mehreren Momentaufnahmen des Produkts basieren, die in dem zeitlich geordneten Satz enthalten ist.

6. Verfahren nach Anspruch 5, wobei die eine oder mehreren Ähnlichkeitssignaturen aus einer neuronalen Netzwerkarchitektur erhalten werden, die auf eine jeweilige Momentaufnahme des Produkts angewendet wird.

7. Verfahren nach einem der Ansprüche 5 bis 6, wobei die eine oder die mehreren Ähnlichkeitssignaturen eines oder mehrere der Folgenden kodieren:

- Informationen über die Verteilung des Produkts;
- Informationen über die Reaktion des Produkts auf eine physische Stimulation; und/oder
- eine Textbeschreibung des Produkts.

8. Verfahren nach einem der Ansprüche 1 bis 7, weiter umfassend Berechnung eines oder mehrerer Labels für jede der einen oder mehreren Momentaufnahmen, die dem bestimmten Trend entsprechen, wobei das Berechnen Folgendes umfasst:

- Erhalten von Metadaten aus jeder der einen oder mehreren Momentaufnahmen, wobei alle entsprechenden Metadaten einen Bereich/Bereiche von physischen Werten des Produkts enthalten und repräsentativ für das neue Problem sind;
- Zuweisen von Datenelementen zu jeder der einen oder mehreren Momentaufnahmen, die den erhaltenen Metadaten entsprechen.

9. Verfahren nach Anspruch 8, weiter umfassend Erhalten einer ersten Verteilung der erhaltenen Metadaten über die abgerufenen Momentaufnahmen und einer zweiten Verteilung der erhaltenen Metadaten über den Datensatz und Zuweisen von Datenelementen, die jeweils erhaltenen Metadaten entsprechen, für die die erhaltene erste und die zweite Verteilung verschieden sind.

10. Verfahren nach Anspruch 8 oder 9, weiter umfassend Durchführen einer Konsistenzprüfung der erhaltenen Metadaten mit Metadaten der aktuellen Momentaufnahme.

11. Computerprogramm, umfassend Anweisungen zur Durchführung des Verfahrens nach einem der Ansprüche 1 bis 10.

12. Computerlesbares Speichermedium, auf dem ein Computerprogramm nach Anspruch 11 aufgezeichnet ist.

13. System, umfassend einen Prozessor, der mit einem Speicher und einer grafischen Benutzeroberfläche gekoppelt ist, wobei auf dem Speicher das Computerprogramm nach Anspruch 11 aufgezeichnet ist.

**Revendications**

1. Procédé mis en œuvre par ordinateur pour inférer un problème émergent dans la fabrication de produits, le procédé comprenant le fait de :

- obtenir (S10) un ensemble ordonné dans le temps comprenant un ou plusieurs instantanés d'un produit et un ou plusieurs seuils de similarité ;

- obtenir (S20) au moins un instantané récent, l'au moins un instantané récent étant ordonné dans le temps après au moins un instantané de l'ensemble ordonné dans le temps ;
- récupérer (S30) un sous-ensemble d'un ou plusieurs instantanés à partir de l'ensemble ordonné dans le temps, le ou les instantanés étant ordonnés dans le temps avant l'au moins un instantané récent et satisfaisant, par rapport à l'au moins un instantané récent, une similarité supérieure à au moins un du ou des seuils de similarité, chacun du ou des seuils de similarité étant basé sur une ou plusieurs signatures de similarité du ou des instantanés de l'ensemble ordonné dans le temps, la ou les signatures de similarité codant une ou plusieurs caractéristiques physiques du produit ;
- déterminer (S40) une tendance à partir du sous-ensemble récupéré et d'une référence, la tendance étant une distribution temporelle des instantanés du sous-ensemble récupéré par rapport à la référence.

2. Procédé selon la revendication 1, dans lequel la détermination (S40) de la tendance comprend en outre le fait de calculer la distribution temporelle par rapport à la référence en déterminant un rapport entre le ou les instantanés du sous-ensemble et un ensemble ordonné dans le temps de référence prédéterminé, l'ensemble ordonné dans le temps de référence prédéterminé étant un ensemble ordonné dans le temps prédéterminé d'instantanés du produit.

3. Procédé selon la revendication 1 ou 2, dans lequel la détermination (S40) de la tendance comprend en outre le fait de calculer la distribution temporelle en ajustant les instantanés du sous-ensemble récupéré à une distribution de séries chronologiques, et de comparer la distribution temporelle calculée à une ou plusieurs valeurs de référence prédéterminées.

4. Procédé selon l'une quelconque des revendications 1 à 3, dans lequel la détermination (S40) de la tendance comprend en outre le fait de calculer la distribution temporelle en définissant une fonction qui prend le ou les instantanés du sous-ensemble en entrée, la sortie de la fonction étant comparée à une distribution de probabilité qui détermine un rapport entre une ou plusieurs valeurs de la sortie de la fonction et une ou plusieurs valeurs de référence prédéterminées de la distribution de probabilité.

5. Procédé selon la revendication 4, dans lequel le ou les seuils de similarité sont en outre basés sur un seuil prédéterminé sur un nombre du ou des instantanés du produit compris dans l'ensemble ordonné dans le temps.

6. Procédé selon la revendication 5, dans lequel la ou les signatures de similarité sont obtenues à partir d'une architecture de réseau de neurones appliquée à un instantané respectif du produit.

7. Procédé selon l'une quelconque des revendications 5 à 6, dans lequel la ou les signatures de similarité codent un ou plusieurs des éléments suivants :

   - des informations sur la distribution du produit ;
   - des informations de la réponse du produit à une stimulation physique ; et/ou
   - une description textuelle du produit.

8. Procédé selon l'une quelconque des revendications 1 à 7, comprenant en outre le fait de calculer une ou plusieurs étiquettes pour chacun du ou des instantanés correspondant à la tendance déterminée, le calcul comprenant le fait de :

   - obtenir des métadonnées à partir de chacun du ou des instantanés, chaque métadonnée respective comprenant une ou des plages de valeurs physiques du produit et étant représentative du problème émergent ;
   - associer, à chacun du ou des instantanés, des éléments de données correspondant chacun aux métadonnées obtenues.

9. Procédé selon la revendication 8, comprenant en outre le fait d'obtenir une première distribution des métadonnées obtenues sur les instantanés récupérés et une deuxième distribution des métadonnées obtenues sur l'ensemble de données, et le fait d'associer des éléments de données correspondant chacun aux métadonnées obtenues pour lesquelles la première et la deuxième distributions obtenues sont différentes.

10. Procédé selon la revendication 8 ou 9, comprenant en outre le fait d'effectuer un contrôle de cohérence des métadonnées obtenues avec les métadonnées de l'instantané récent.

11. Programme informatique comprenant des instructions pour mettre en œuvre le procédé selon l'une quelconque des revendications 1 à 10.

12. Support de stockage lisible par ordinateur sur lequel est enregistré un programme informatique selon la revendication 11.

13. Système comprenant un processeur couplé à une mémoire et à une interface graphique utilisateur, sur laquelle mémoire est enregistré le programme informatique selon la revendication 11.

| obtaining a time-ordered set | S10 |
| obtaining at least one recent snapshot | S20 |
| retrieving a subset of one or more snapshots from the time-ordered set | S30 |
| determining a trend from the retrieved subset and a baseline | S40 |

## FIG. 1

## FIG. 2

| 210 | 220 | 230 | 240 | 250 | 260 | 270 |
|---|---|---|---|---|---|---|
| Compute similarity threshold | Retrieve subset of cases similar to each recent case | Check that subset has emerging trend | Extract label with outstanding metadata | Check that recent case is illustrative of label | Store new detected problem | At runtime, collapse duplicate detected problems |
| Retrieve from configuration **s** the minimum statistically significant cluster size at average density<br><br>Make **q** queries by similarity from random incidents<br><br>**similarity threshold =** median similarity of **s** most similar results | For each recent case c,<br><br>retrieve the **subset** of all cases such that c' in subset if and only if:<br><br>cosine(c, c') > similarity threshold | Check that # elements in subset > s<br><br>Check that:<br><br># elements in recent time window<br>/<br># elements in baseline time window<br>><br>frequency ratio threshold | Using case metadata:<br>- labels from categorical fields<br>- tokenized words and expressions from textual fields<br>- discretized value ranges from numeric fields<br><br>Extract metadata values with top TFIDF<br><br>Check their tfidf is high enough<br><br>Use them to build labels | Check that metadata values with top TFIDF in subset match metadata values of recent case | If and only if all previous checks pass | Collapse and aggregate detected problems with same label<br><br>Only includes detected problems that match user-defined filters and queries<br><br>This allows for better flexibility when selecting problems for investigation |

EP 4 290 322 B1

FIG. 3

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021247754 A1
- US 2020341459 A1
- US 2020081422 A1
- US 2015248755 A1

**Non-patent literature cited in the description**

- **YANG, JING et al.** Using deep learning to detect defects in manufacturing: a comprehensive survey and current challenges. *Materials*, 2020, vol. 13 (24), 5755
- **VOGEL-HEUSER, BIRGIT et al.** Potential for combining semantics and data analysis in the context of digital twins. *Philosophical Transactions of the Royal Society A*, 2021, vol. 379 (2207), 20200368
- Failure Modes and Effects Analysis (FMEA) Tool.. **TOOLKIT**. QI Essentials. Institute for Healthcare Improvement, 2017
- **QI, CHARLES R. et al.** Pointnet: Deep learning on point sets for 3d classification and segmentation.. *Proceedings of the IEEE conference on computer vision and pattern recognition*, 2017
- **XU, HAOTIAN ; MING DONG ; ZICHUN ZHONG**. Directionally convolutional networks for 3D shape segmentation.. *Proceedings of the IEEE International Conference on Computer Vision*, 2017
- **GAMBHIR, MAHAK ; VISHAL GUPTA**. Recent automatic text summarization techniques: a survey. *Artificial Intelligence Review*, 2017, vol. 47 (1), 1-66